# FASCICULE DE BREVET EUROPEEN

(11) **EP 0 722 816 B1**
(45) Date de publication et mention de la délivrance du brevet: **29.12.1999**
(21) Numéro de dépôt: 96100205.2
(22) Date de dépôt: 09.01.1996
(51) Int. Cl.: B29C 33/14, B29C 33/48

(54) **Procédé et dispositif pour la réalisation d'une partie au moins d'un moule de pneumatique comportant au moins un élément moulant un motif non démoulable**
Verfahren und Vorrichtung zur Herstellung zumindest eines Teils einer Reifenform mit zumindest einem Formteil zur Formgebung eines nichtentformbaren Musters
Process and apparatus for manufacturing at least one part of a tyre mould having at least one element for moulding a non-demouldable pattern

(30) Priorité: 18.01.1995 FR 9500618
(43) Date de publication de la demande: 24.07.1996
(73) Titulaire: COMPAGNIE GENERALE DES ETABLISSEMENTS MICHELIN - MICHELIN & CIE, 63040 Clermont-Ferrand Cédex (FR)
(72) Inventeur: Bellot, Guy, F-63530 Chanat-la-Mouteyre (FR)
(74) Mandataire: Bauvir, Jacques

(56) Documents cités:
- WO-A-81/01682
- FR-A- 1 203 290
- FR-A- 1 585 100
- FR-A- 2 071 797
- GB-A- 748 818
- US-A- 2 765 508

## Description

La présente invention concerne un procédé pour la réalisation d'un moule destiné au moulage d'une partie au moins d'une bande de roulement d'un pneumatique. Elle concerne plus particulièrement un procédé pour mouler le moule d'un pneumatique sur un contre-moule, ledit contre-moule étant pourvu d'éléments en relief réalisés séparément et faisant saillie par rapport à la surface de moulage dudit contre-moule. La partie qui fait saillie est destinée à être insérée et ancrée dans le moule pendant la coulée dudit moule.

Lorsque l'on veut réaliser une sculpture d'une bande de roulement d'un pneumatique comportant une ou plusieurs fentes fines, c'est-à-dire d'épaisseur inférieure ou égale à 2.5 mm, et plus ou moins profondes, on réalise séparément des éléments sous forme de lamelles métalliques, avant de les incorporer au moule de ladite bande; les lamelles sont en général en acier afin d'atteindre une rigidité adéquate pour permettre un grand nombre de moulages de pneumatiques sans modification de la géométrie desdites lamelles.

Le brevet français FR 2 430 838 décrit, pour réaliser un moule comportant des lamelles, un procédé consistant à usiner par tournage un contre-moule puis à réaliser, sur ledit contre-moule, des fentes fines à l'aide d'un procédé d'érosion par étincelage, chaque fente ayant une géométrie qui correspond exactement à la géométrie de la lamelle destinée à y être insérée avant de procéder à la coulée d'aluminium pour former le moule.

Un tel procédé ne permet la mise en place que de lamelles de forme démoulable puisque une fois la coulée solidifiée, les lamelles étant partiellement insérées dans le moule, leur extraction du contre-moule ne peut se faire que par coulissement relatif dans leurs logements respectifs dans le contre-moule suivant une direction de démoulage prédéterminée.

L'évolution des performances exigées en matière de pneumatique amène à concevoir des sculptures de pneumatique comportant des fentes fines qui présentent des variations importantes de géométrie dans l'épaisseur de la bande de roulement dudit pneumatique; on trouve un exemple de ce type de fente décrit dans la demande de brevet FR 2 641 501. Dans de pareils cas, les lamelles ont des formes non démoulables ce qui rend totalement inopérant le procédé décrit dans le brevet FR 2 430 838. Il convient de noter qu'en ce qui concerne le moulage d'une bande de roulement d'un pneumatique, le démoulage des lamelles est possible grâce à la déformabilité et à l'élasticité des matériaux composant ladite bande.

Dans le brevet français FR 1 203 290, il est décrit un autre procédé de fabrication d'un moule de pneumatique par moulage sur un contre-moule en plâtre dans lequel des lamelles métalliques sont partiellement noyées au moment de la fabrication du contremoule. Après solidification de la coulée réalisée sur ledit contre-moule en plâtre les lamelles ancrées fermement dans le moule sont dégagées du contre-moule en plâtre en brisant celui-ci, ce qui rend bien sûr ce dernier inutilisable pour un autre moulage. Si ce procédé permet bien de réaliser un moule comportant des lamelles non démoulables, il est malheureusement long à mettre en oeuvre et particulièrement coûteux puisqu'il nécessite, à chaque moulage d'un moule d'un pneumatique, la réalisation d'un nouveau contre-moule en plâtre.

Le but de la présente invention est de proposer à la fois un procédé de moulage par coulée d'un moule destiné au moulage d'une partie au moins d'une bande de roulement d'un pneumatique comportant au moins un élément non démoulable faisant saillie sur ledit moule, ledit procédé ne présentant pas les inconvénients des procédés qui viennent d'être décrits. Chaque élément non démoulable est réalisé séparément avant d'être partiellement ancré dans le moule au moment de la coulée dudit moule.

Un autre objectif de l'invention est de proposer un dispositif destiné spécifiquement à la mise en oeuvre du procédé conforme à l'invention, ledit dispositif assurant une mise en place précise de chaque élément de relief non démoulable dans le contre-moule tout en permettant le démoulage aisé du moule après solidification de la coulée dudit moule.

Selon l'invention, pour réaliser un moule, utilisé pour le moulage d'au moins une partie de la bande de roulement d'un pneumatique pourvue d'une sculpture de forme donnée, ledit moule étant équipé d'au moins un motif comportant au moins une contre dépouille, on définit un procédé de moulage qui comporte les étapes suivantes :
- on réalise, pour chaque motif comportant au moins une contre dépouille, au moins un élément moulant comportant une première partie définissant ledit motif et comportant une seconde partie située dans le prolongement de la première partie, constituant l'ancrage dudit élément dans ledit moule;
- on réalise un contre-moule, conçu pour être animé d'un mouvement de démoulage suivant une direction prédéterminée, ayant une surface de moulage qui, en dehors du ou des motifs comportant au moins une contre dépouille, correspond essentiellement à ladite sculpture, et dans laquelle est ménagé, au droit de chaque motif comportant au moins une contre dépouille, un logement s'ouvrant par une ouverture dans la surface de moulage et dont le contour inclut au moins le contour circonscrit à la projection, sur ladite surface de moulage et dans la direction de démoulage, de tous les points dudit motif comportant au moins une contre dépouille, ledit logement étant défini dans ledit contre-moule par le prolongement du contour dudit logement dans la direction de démoulage;
- on associe à chaque élément moulant un moyen pour réaliser la continuité de la surface du contre-moule au voisinage dudit élément moulant quand ce dernier est en place dans le logement correspondant sur le contre-moule et pour maintenir en place ledit élément moulant;
- on assemble le contre-moule et le ou les élément(s) moulant(s), chaque élément moulant étant équipé du moyen associé;
- on réalise le moulage du moule sur le contre-moule au moyen d'une matière coulable et solidifiable adéquate;
- on démoule le moule de son contre-moule en sortant chaque élément moulant de son logement suivant la direction de démoulage, la seconde partie de chaque élément restant liée audit moule.

Un motif comportant au moins une contre-dépouille dans sa forme peut être qualifié de non démoulable, de sorte que, si l'élément moulant, utilisé pour le moulage dudit motif, est emprisonné dans une matière rigide alors il n'existe pas de coulissement possible entre l'élément et la matière l'enrobant et ceci quelque soit la direction de démoulage que l'on puisse envisager. Par rigide, on entend une matière qui ne permet pas une déformation élastique suffisante pour pouvoir démouler l'élément, contrairement à la matière composant la bande de roulement d'un pneumatique.

Le moyen associé à chaque élément moulant a pour rôle de réaliser la fermeture du logement et par là l'étanchéité du logement dans lequel est insérée la première partie dudit élément afin d'empêcher la matière de coulée du moule de venir remplir ledit logement, tout en assurant la continuité géométrique de la surface du contre-moule au voisinage dudit élément. Le moyen associé a aussi pour rôle de permettre un maintien satisfaisant dudit élément dans son logement correspondant dans le contre-moule de façon à éviter tout déplacement de l'élément pendant l'opération de moulage du moule.

L'un des avantages du procédé objet de l'invention est de permettre la fabrication, à partir du même contre-moule, d'un nombre quelconque de moules comportant des éléments moulants pour mouler des motifs comportant au moins une contre dépouille dans un temps et pour un coût réduits comparativement aux procédés employés jusque là.

La présente invention concerne aussi un dispositif permettant la mise en place et le démoulage d'au moins un élément moulant dans un contre-moule comportant une surface de moulage destinée au moulage, au moyen d'une coulée d'un matériau coulable, d'un moule pour mouler au moins partiellement une bande de roulement d'un pneumatique. Chaque élément moulant comporte deux parties séparées par une frontière : une première partie définit un motif comportant au moins une contre dépouille et est destinée à être introduite dans un logement réalisé dans le contre-moule, et une seconde partie, située dans le prolongement de la première partie, fait saillie par rapport à la surface de moulage du contre-moule et est destinée à être prise dans le matériau de coulée composant le moule. Par frontière, il faut comprendre la trace sur la surface de l'élément moulant de l' intersection de cette surface avec la surface de moulage du moule.

Le dispositif selon l'invention comporte au moins une pièce pouvant être mise en contact avec l'élément moulant au moins à la frontière entre la première partie et la seconde partie, pour former un ensemble tiroir, la première de l'élément moulant étant introduite dans ledit logement du contre moule jusqu'à la position souhaitée, ledit ensemble, une fois la première partie en place dans son logement, assurant la continuité de la surface du contre-moule au voisinage de l'élément tout en empêchant l'introduction du matériau de la coulée dans le logement pendant la coulée et, dans un deuxième temps c'est à dire après solidification du matériau de la coulée, être extrait dudit logement avant d'être désassemblé pour libérer la première partie de l'élément moulant.

Le dispositif selon l'invention assure à la fois la fermeture du logement dans lequel est mise en place la première partie de l'élément et le maintien dudit élément pendant l'opération de la coulée du moule.

Selon un premier mode de réalisation, on réalise au moins une pièce pour venir enserrer en totalité la première partie de l'élément moulant.

Une façon d'obtenir un dispositif suivant ce premier mode de réalisation est de mouler une pièce unique autour de la première partie de l'élément moulant à l'aide d'une matière coulable et solidifiable, ladite pièce reproduisant par ses faces externes la géométrie du logement dans lequel elle est destinée à être introduite avec l'élément. La matière constituant la pièce moulée autour de la première partie de l'élément est séparable de ladite partie après extraction du logement et démoulage du moule.

Dans ce dernier cas, le volume du moulage ainsi réalisé et incluant la première partie de l'élément correspond exactement au volume du logement prévu dans le contre-moule pour recevoir le dispositif enserrant la première partie de l'élément moulant. On peut employer soit des matériaux (plâtre, sable, alliage à bas point de fusion,...) qui seront détruits après démoulage du moule, soit des matériaux (thermoplastique,...) offrant l'avantage de permettre la réutilisation du moulage grâce à leurs caractéristiques élastiques permettant l'assemblage et le désassemblage dudit moulage et de l'élément par simple déformation élastique dudit moulage.

Dans ce dernier cas, cette même pièce moulée peut être avantageusement réutilisée pour envelopper un autre élément moulant de même forme et réaliser un autre moule.

Selon un deuxième mode de réalisation du dispositif, celui-ci est composé par au moins une pièce destinée à venir enserrer en partie ou en totalité la partie de l'élément moulant faisant saillie par rapport à la surface de moulage du contre-moule; dans ce deuxième mode de réalisation, le dispositif est prévu pour être incorporé, ainsi que la deuxième partie de l'élément, de façon définitive dans le moule.

Une meilleure compréhension de l'invention et de ses avantages sera obtenue à l'aide des figures annexées à la présente description représentant des exemples d'application qui ne sont en rien limitatifs :
La figure 1 est une vue en perspective d'un contre-moule prêt pour le moulage d'un moule de pneumatique et comportant une lamelle métallique rapportée.
La figure 2 est une vue de détail de la surface du contre-moule de la figure 1 au voisinage de la lamelle.
La figure 3 est une vue de détail de la surface du contre-moule de la figure 1 dans lequel est partiellement introduit un ensemble tiroir incluant une lamelle.
La figure 4 est une vue en coupe d'un dispositif destiné à permettre la mise en place d'une lamelle dont une coupe transversale a la forme d'un Y.
La figure 5 est une vue en coupe d'un dispositif destiné à permettre la mise en place et l'enlèvement d'une lamelle dont une coupe transversale présente des ondulations.

Sur la figure 6 est représentée la vue en coupe transversale d'un logement pratiqué dans un contre-moule dans lequel est partiellement introduite une lamelle dont la partie extérieure audit contre-moule est en partie enserrée dans un dispositif destiné à fermer ledit logement.

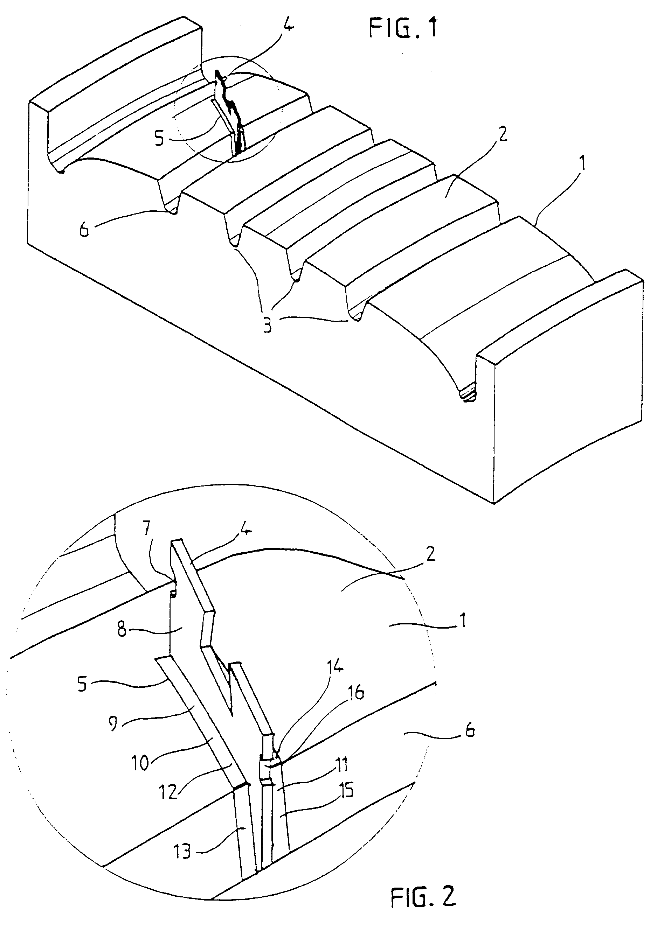

Sur la figure 1 est représenté un contre-moule métallique 1 destiné au moulage d'un moule, non visible sur cette figure, pour le moulage ultérieur d'une bande de roulement d'un pneumatique. Le contre-moule 1 comporte une surface de moulage 2 dont le profil correspond à celui de la bande de roulement d'un pneumatique et ladite surface 2 comporte, dans l'exemple décrit, plusieurs rainures 3 orientées circonférentiellement. Le contre-moule 1 peut être animé d'un mouvement de démoulage suivant une direction prédéterminée. Un logement 5 est creusé dans le contre-moule 1 pour recevoir une lamelle métallique 4 réalisée séparément; dans le cas présent, ce logement comporte quatre faces parallèles deux à deux, les arêtes formées par les intersections desdites faces étant parallèles à une même direction correspondant à la direction de démoulage. Le logement 5 débouche d'un côté dans une rainure 6 dudit contre-moule 1.

La figure 2 montre une vue de détail de la figure 1 au voisinage de la lamelle 4 en place dans son logement 5, ladite lamelle 4 débouchant en partie par un de ses côtés latéraux dans la rainure 6. Une partie 8 de la lamelle 4 est située à l'extérieur du contre-moule 1 par rapport à la surface de moulage 2 de façon à pouvoir être noyée dans le matériau de coulée du moule. Sur cette partie 8 sont réalisés des décrochements 7, 16 destinés à assurer un meilleur ancrage de la lamelle 4 dans le moule.

La partie 8 de la lamelle 4 se prolonge par une partie, non visible sur les figures 1 et 2, qui est enserrée entre des pièces métalliques 10 et 11 pour former un ensemble tiroir 9. Sur la figure 2, cet ensemble tiroir 9 est introduit dans le logement 5 et se trouve dans une position prête pour la réalisation du moulage d'un moule. Les faces 12, 13, 14, 15, desdites pièces 10 et 11 sont usinées de manière à pouvoir assurer la continuité de la surface de moulage 2 du contre-moule 1 au voisinage de la lamelle 4 une fois l'ensemble tiroir en place dans le logement 5, évitant ainsi la pénétration du matériau de coulée dans le logement.

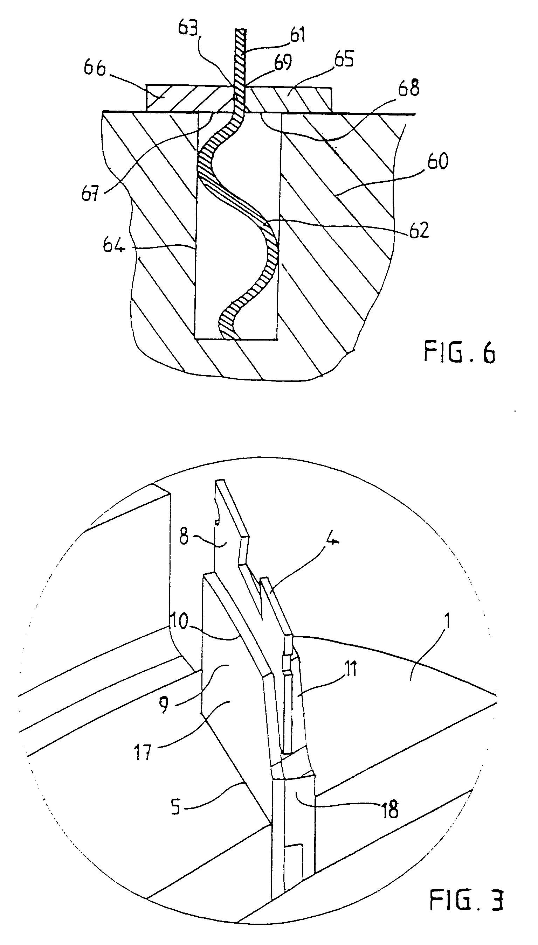

Pour faciliter la compréhension de l'invention on a représenté, sur la figure 3, ce même ensemble tiroir 9 en position partiellement introduite dans son logement 5.

L'ensemble tiroir 9 est composé de deux pièces 10 et 11 enserrant la lamelle 4 dont seule est visible la partie 8. Dans la position représentée, on ne distingue que deux faces latérales 17 et 18 de l'ensemble tiroir 9 : ces faces ainsi que les faces opposées de l'ensemble tiroir sont parallèles aux faces du logement 5 situées en vis-à-vis. La présence de jeux appropriés entre l'ensemble et le logement permet un mouvement aisé dudit ensemble dans son logement dans la direction de démoulage du moule, tout en assurant un excellent positionnement de la lamelle 4 par rapport au contre-moule 1, sans toutefois permettre une infiltration du matériau de coulée composant le moule dans le logement 5.

Après solidification du moulage du moule, la partie 8 de la lamelle 4 étant dès lors fermement ancrée dans ledit moule, il est possible, en déplaçant le contre-moule suivant la direction de démoulage et dans le sens opposé au moule, d'extraire l'ensemble tiroir 9 du contre-moule 1. Ensuite, on libère la partie de la lamelle 4 enserrée dans l'ensemble tiroir 9.

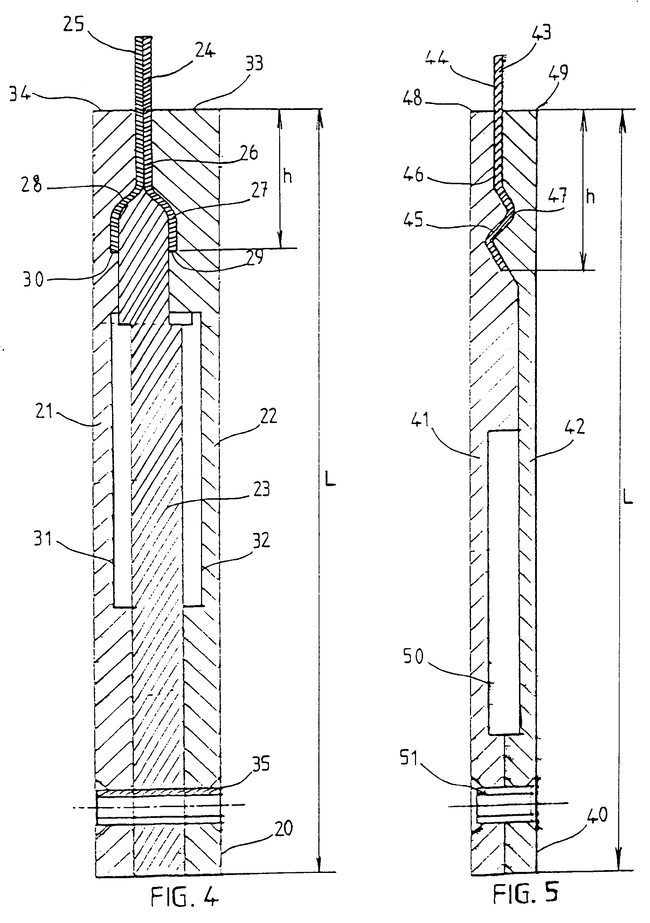

Sur la figure 4 est représentée, vue suivant une coupe transversale, réalisée suivant un plan contenant la direction de démoulage, un ensemble tiroir 20 dans lequel est enserrée partiellement une lamelle 24 dont au moins une section, vue suivant ce plan de coupe, a la forme d'un Y. Sur cette coupe, la lamelle 24 est composée d'une queue qui se prolonge par deux branches pour former un Y.

Le dispositif employé pour former l'ensemble tiroir 20 comporte trois pièces métalliques 21, 22, 23 usinées et assemblées de façon à enserrer une première partie 26 de la lamelle 24 composée des branches du Y et d'une partie de la queue, la seconde partie 25 prolongeant la première partie vers l'extérieur dudit ensemble tiroir.

Cet ensemble tiroir 20 a, si on fait exception de la partie 25 de la lamelle 24, une section transversale (représentée sur la figure 4) de forme rectangulaire dont le grand côté a une longueur L qui est supérieure à la dimension maximale h, mesurée suivant la même direction que la longueur L, de la partie 26 de la lamelle enserrée dans ledit ensemble 20. De plus, les pièces 21 et 22 sont usinées de manière à pouvoir épouser les géométries des faces latérales 27 et 28 et les géométries des faces d'extrémité 29 et 30 des branches du Y de la lamelle; enfin la pièce 23 venant s'intercaler entre les pièces 21 et 22 est réalisée de façon à venir combler la région située entre les deux branches de la lamelle 24 en épousant leurs faces internes en regard.

Les trois pièces 21, 22, 23 composant, avec la lamelle 24, l'ensemble tiroir 20 sont maintenues solidairement assemblées par des moyens de fixation 35, tels que des goupilles, et disposés près de la base inférieure dudit ensemble 20, c'est à dire du côté opposé à la lamelle 24. Des évidements 31 et 32, réalisés respectivement sur les pièces 21 et 22 dans leurs parties médianes et faisant face à la pièce intermédiaire 23, permettent d'augmenter la souplesse de flexion transversale des pièces 21 et 22. Il est ainsi possible d'introduire et de dégager la lamelle 24 en écartant élastiquement l'une de l'autre les extrémités 34 et 33 des pièces 21 et 22, lesdites extrémités étant situées à l'opposé des moyens de fixation 35, sans avoir à démonter ledit ensemble.

La figure 5 représente la section transversale d'une lamelle 43 formée de deux parties 44 et 45, la partie 45, ondulée dans le plan de coupe de la figure, étant enserrée entre les deux faces en vis-à-vis 46 et 47 des deux pièces métalliques 41 et 42 pour constituer un ensemble tiroir 40. Cet ensemble tiroir 40 a, dans le plan de coupe de la figure, et si l'on ne tient pas compte de la partie 44 de la lamelle 43, une section transversale rectangulaire dont le grand côté a une longueur L qui est supérieure à la dimension maximale h, mesurée suivant la même direction que la longueur L, de la première partie 45 de la lamelle 43.

Des moyens d'assemblage, comme une goupille 51, positionnés près de l'extrémité de l'ensemble tiroir opposée à la lamelle, assurent la tenue de l'ensemble tout en permettant un écartement transversal élastique des extrémités 48 et 49 des pièces 41 et 42 situées au voisinage de la lamelle 43 afin d'extraire celle-ci de l'ensemble tiroir 40 ou encore de l'introduire. Comme dans le cas de la figure 4, ce mouvement d'ouverture, provoqué par exemple lors de l'extraction de la lamelle 43 de l'ensemble 40 par une traction sur ladite lamelle, est facilité par la présence d'un évidemment 50 réalisé sur la face interne 46 de la pièce 41 de manière à augmenter la souplesse de la pièce 41 à la flexion transversale sous l'effet dudit mouvement.

On peut remarquer que le dispositif selon l'invention s'adapte aussi au cas de lamelles qui ont, vues en coupe transversale, des formes identiques à celles des lamelles qui viennent d'être décrites, mais pouvant en plus présenter soit des ondulations dans un autre plan soit des variations de géométrie d'un plan de coupe transversal à un autre plan de coupe. Il peut être utile de réaliser des pièces dont les formes des surfaces en vis-à-vis des faces de la lamelle à enserrer reproduisent ou s'approchent de la géométrie desdites faces.

La figure 6 représente, vue en coupe transversale, un autre mode de réalisation d'un dispositif permettant la réalisation d'un moule par moulage sur un contre-moule 60, ledit contre-moule 60 comportant au moins une lamelle non démoulable 61 et comportant une partie 62 ondulée dans le plan de coupe de la figure. Le dispositif selon l'invention comprend deux pièces 65 et 66 qui peuvent être assemblées avec la lamelle 61 de façon à réaliser un ensemble tiroir 69. La partie 63 de la lamelle 61, dans le prolongement de la première partie 62, et située à l'extérieur du logement est enserrée sur une partie seulement de sa longueur entre les deux pièces métalliques 65 et 66.

La partie 62 de la lamelle 61 est, après réalisation de l'ensemble tiroir 69, introduite dans un logement 64 dont la projection sur la surface du contre-moule suivant une direction de démoulage correspond à la projection, suivant cette direction, de tous les points de la partie 62 sur ladite surface.

Les pièces 65 et 66 comportent des faces 67 et 68 destinées à venir partiellement en contact avec la surface de moulage du contre-moule de part et d'autre de l'ouverture du logement 64 sur ladite surface. Les faces 67 et 68 sont en outre réalisées de façon que leur géométrie correspond à la géométrie du moule au voisinage de la lamelle 61 et de façon à venir fermer la totalité de l'ouverture du logement 64 sur la surface de moulage du contre-moule.

Le dispositif, comprenant les pièces 65 et 66, assemblé avec la lamelle 61 de façon à réaliser un ensemble tiroir 69, permet ainsi la fabrication d'un moule par coulée d'une matière coulable sur le contre-moule 60, le matériau de coulée enveloppant à la fois la partie 63 de la lamelle 61 et les pièces 65 et 66 dudit dispositif assemblées sur ladite partie. Pour éviter tout mouvement de la lamelle 61 au cours de l'opération de coulée on peut prévoir, par exemple, un joint de colle temporaire entre les surfaces en contact du contre-moule et des pièces 65 et 66. Par temporaire il faut comprendre un joint de colle qui assure un maintien suffisant des pièces 65 et 66 sur la surface du contre-moule pendant la coulée du matériau composant le moule, sans toutefois empêcher le décollage au moment du démoulage du moule après solidification.

Les dispositifs décrits, assurant la démoulabilité des lamelles et leur maintien pendant la coulée du moule, offrent en outre l'avantage de permettre un bon positionnement desdites lamelles par rapport au contre-moule; il est en effet aisé d'usiner, dans le contre-moule, des logements dont les dimensions sont parfaitement adaptées à celles desdits dispositifs, chaque lamelle étant parfaitement positionnée par rapport à la ou aux pièce(s) composant le dispositif enserrant ladite lamelle.

Un autre avantage du procédé selon l'invention est de permettre, tout en conservant le contre-moule voire les logements déjà réalisés, le changement de forme des éléments moulant en adaptant pour toute nouvelle forme le nombre et la géométrie des pièces pour former l'ensemble tiroir, ledit ensemble ayant bien entendu des dimensions compatibles avec les dimensions du logement correspondant sur le contre-moule.

La présente invention concerne aussi un contre-moule réutilisable dont au moins une surface est utilisée pour mouler, au moyen d'un matériau coulable et solidifiable, un moule lui-même employé pour mouler au moins partiellement une bande de roulement d'un pneumatique comportant une sculpture de forme donnée, ledit contre-moule comportant au moins un élément moulant pour mouler un motif comportant au moins une contre dépouille. Ledit élément moulant fait saillie par rapport à la surface de moulage du contre-moule et est réalisé séparément. Le contre-moule selon l'invention est caractérisé en ce qu'il comporte, au voisinage de chaque élément moulant non démoulable, un logement débouchant sur la surface de moulage, ledit logement permettant la mise en place d'un ensemble tiroir composé par l'assemblage d'au moins une pièce avec l'élément moulant et son enlèvement, ledit ensemble tiroir ayant une surface assurant la continuité de la surface du contre-moule au voisinage dudit élément.

Enfin, l'invention concerne aussi un pneumatique moulé avec un moule réalisé suivant le procédé conforme à l'invention et comportant une bande de roulement pourvue d' incisions moulées par des lamelles de forme non démoulable. Pour un tel pneumatique et autour desdites incisions, la surface de la bande de roulement comporte des traces situées à la rencontre entre la surface du contre-moule et du moyen assurant la continuité de ladite surface au moment de la coulée. Ces traces sont le reflet des contours des logements des éléments moulants qui ont été dans un premier temps marqués sur le moule avant de se retrouver marqués sur la bande de roulement. Il faut noter que ces traces, pour autant qu'elles sont visibles sur la bande de roulement d'un pneumatique neuf, disparaissent très rapidement après quelques kilomètres de roulage dudit pneumatique et bien sûr ne causent aucune diminution de la qualité du moulage de ladite bande de roulement.

## Revendications

1. Procédé de réalisation d'un moule utilisé pour le moulage d'au moins une partie de la bande de roulement d'un pneumatique, ladite bande étant pourvue d'une sculpture de forme donnée comportant un ou des motifs comportant au moins une contre dépouille moulés par des éléments moulants dans lequel :
- on réalise, pour chaque motif comportant au moins une contre dépouille, au moins un élément moulant comportant une première partie définissant ledit motif et comportant une seconde partie située dans le prolongement de la première partie, constituant l'ancrage dudit élément dans ledit moule;
- on réalise un contre-moule, conçu pour être animé d'un mouvement de démoulage suivant une direction prédéterminée, ayant une surface de moulage qui, en dehors du ou des motifs comportant au moins une contre dépouille, correspond essentiellement à ladite sculpture, et dans laquelle est ménagé, au droit de chaque motif comportant au moins une contre dépouille, un logement s'ouvrant par une ouverture dans la surface de moulage et dont le contour inclut au moins le contour circonscrit à la projection, sur ladite surface de moulage et dans la direction de démoulage, de tous les points dudit motif comportant au moins une contre dépouille, ledit logement étant défini dans ledit contre-moule par le prolongement du contour dudit logement dans la direction de démoulage;
- on associe à chaque élément moulant un moyen pour réaliser la continuité de la surface du contre-moule au voisinage dudit élément moulant quand ce dernier est en place dans le logement correspondant sur le contre-moule et pour maintenir en place ledit élément moulant;
- on assemble le contre-moule et le ou les élément(s) moulant(s), chaque élément étant équipé du moyen associé;
- on réalise le moulage du moule sur le contre-moule au moyen d'une matière coulable et solidifiable adéquate;
- on démoule le moule de son contre-moule en sortant chaque élément moulant de son logement suivant la direction de démoulage, la seconde partie de chaque élément restant liée audit moule.

2. Dispositif permettant la mise en place et le démoulage d'au moins un élément moulant (4, 24, 43) dans un contre-moule (1) comportant une surface de moulage destinée au moulage, au moyen d'une coulée d'un matériau coulable, d'un moule d'une partie d'une bande de roulement d'un pneumatique, ledit contre-moule (1) comportant un logement (5) réalisé au droit de la position dudit élément moulant dans le contre-moule (1), chaque élément moulant comportant deux parties ayant une frontière commune, une première partie (26, 45) définissant un motif comportant au moins une contre dépouille et une seconde partie (25, 44) située dans le prolongement de la première partie, cette seconde partie faisant saillie par rapport à la surface de moulage dudit contre-moule (1), ledit dispositif comportant au moins une pièce (10, 11, 21 22, 23, 41, 42) pouvant être mise en contact avec ledit élément moulant (4, 24, 43) au moins à la frontière entre la première partie et la seconde partie, pour former un ensemble tiroir (9, 20, 40), la première partie de l'élément moulant étant introduite dans ledit logement (5) du contre moule jusqu'à la position souhaitée, ledit ensemble (9, 20, 40), une fois la première partie en place dans son logement, assurant la continuité de la surface (2) du contre-moule (1) au voisinage de l'élément moulant tout en empêchant l'introduction du matériau de la coulée dans le logement (5) pendant la coulée et, dans un deuxième temps après solidification du matériau de la coulée, être extrait dudit logement avant d'être désassemblé pour libérer la première partie de l'élément moulant.

3. Dispositif selon la revendication 2 caractérisé en ce que la pièce en contact avec l'élément moulant pour former l'ensemble tiroir est unique et réalisée par moulage autour de la première partie dudit élément moulant à l'aide d'une matière coulable et solidifiable, ladite matière étant séparable de l'élément moulant.

4. Dispositif selon la revendication 3 caractérisé en ce que la matériau constituant la pièce enveloppant l'élément confère à ladite pièce des caractéristiques élastiques permettant l'assemblage et le désassemblage de ladite pièce et de l'élément moulant par simple déformation élastique de ladite pièce.

5. Dispositif selon la revendication 2 caractérisé en ce que l'ensemble tiroir (20, 40) est composé de plusieurs pièces (21, 22, 23, 41, 42) enserrant la première partie de l'élément moulant (24, 43), ledit ensemble tiroir ayant une élasticité de déformation suffisante pour permettre soit la mise en place soit le dégagement aisé de ladite première partie dans l'ensemble tiroir, sans avoir à démonter pièce par pièce ledit ensemble.

6. Dispositif selon la revendication 2 caractérisé en ce que la ou les pièces (65, 66), formant l'ensemble tiroir (69) avec la lamelle (61), sont destinées à être incorporées dans le moule au cours de l'opération de moulage.

7. Dispositif selon l'une des revendications 2 à 6 caractérisé en ce que l'élément moulant est une lamelle (24) dont au moins une section transversale a une forme en Y.

8. Dispositif selon l'une des revendications 2 à 6 caractérisé en ce que l'élément moulant est une lamelle (43) dont au moins une section transversale a une forme qui présente au moins une ondulation dans au moins une direction.

9. Contre-moule (1) réutilisable dont au moins une surface (2) est utilisée pour mouler un moule lui-même employé pour mouler au moins partiellement une bande de roulement d'un pneumatique comportant une sculpture de forme données ledit contre-moule comportant au moins un élément moulant (4) comportant au moins une contre dépouille faisant saillie par rapport à la surface (2) de moulage du contre-moule (1) et réalisé séparément, ledit contre-moule étant caractérisé en ce qu'il comporte un logement (5) pour recevoir chaque élément moulant (4), ce logement (5) débouchant sur la surface de moulage (2), ledit logement (5) permettant la mise en place d'un ensemble tiroir (9) composé par l'assemblage d'au moins une pièce avec l'élément moulant (4) et son enlèvement, ladite pièce assurant la continuité de la surface (2) du contre-moule au voisinage dudit élément moulant.

10. Contre-moule (1) selon la revendication 9 caractérisé en ce que la pièce en contact avec l'élément moulant (4) pour former l'ensemble tiroir (9) est unique et réalisée par moulage autour de la première partie dudit élément moulant à l'aide d'une matière coulable et solidifiable, ladite matière étant séparable de l'élément moulant.

11. Contre-moule (1) selon la revendication 9 caractérisé en ce que l'ensemble tiroir (20, 40) est composé de plusieurs pièces (21, 22, 23, 41, 42) enserrant la première partie de l'élément moulant (24, 43), ledit ensemble tiroir ayant une élasticité de déformation suffisante pour permettre soit la mise en place soit le dégagement aisé de ladite première partie dans l'ensemble tiroir, sans avoir à démonter pièce par pièce ledit ensemble.

12. Contre-moule (1) selon la revendication 9 caractérisé en ce que la ou les pièces (65, 66), formant l'ensemble tiroir (69) avec la lamelle (61), sont destinées à être incorporées dans le moule au cours de l'opération de moulage.

13. Contre-moule (1) selon l'une des revendications 9 à 12 caractérisé en ce que l'élément moulant est une lamelle (24) dont au moins une section transversale a une forme en **Y.**

14. Contre-moule (1) selon l'une des revendications 9 à 12 caractérisé en ce que l'élément moulant est une lamelle (43) dont au moins une section transversale a une forme qui présente au moins une ondulation dans au moins une direction.

15. Pneumatique moulé avec un moule réalisé selon le procédé défini par la revendication 1.

## Claims

1. A process for producing a mould used for the moulding of at least a portion of the tread of a tyre, said tread being provided with a tread pattern of given shape including one or more motifs comprising at least one undercut moulded by moulding elements in which:
- for each motif comprising at least one undercut, there is produced at least one moulding element comprising a first portion which defines said motif and comprising a second portion located in the extension of the first portion and which constitutes the anchoring of said element in said mould;
- a countermould is produced, designed to have imparted thereto a mould-removal movement in a predetermined direction, having a moulding surface which, aside from the motif or motifs comprising at least one undercut, Corresponds essentially to said tread pattern and in which there is provided, at the place of each motif comprising at least one undercut, a housing which opens via an opening in the moulding surface and the contour of which includes at least the contour circumscribed on the projection, on said moulding surface in the mould-removal direction, of all the points of said motif comprising at least one undercut, said housing being defined in said countermould by the extension of the contour of said housing in the mould-removal direction;
- there is associated with each moulding element a means for producing the continuity of the surface of the countermould in the vicinity of said moulding element when the latter is in place in the corresponding housing on the countermould, and for maintaining said moulding element in place;
- the countermould and the moulding element or elements are assembled, each element being equipped with the associated means;
- the moulding of the mould on the countermould is effected by means of a suitable pourable, solidifiable material;
- the mould is removed from its countermould by removing each moulding element from its housing in the mould-removal direction, the second portion of each element remaining attached to said mould.

2. A device which permits the putting in place and removal from the mould of at least one moulding element (4, 24, 43) in a countermould (1) comprising a moulding surface intended for casting, by means of the pouring of a pourable material, a mould of a portion of a tread of a tyre, said countermould (1) comprising a housing (5) made at the position of said moulding element in the countermould (1), each moulding element comprising two portions having a common boundary, a first portion (26, 45) defining a motif comprising at least one undercut and a second portion (25, 44) located in the extension of the first portion, this second portion protruding from the moulding surface of said countermould (1), said device comprising at least one part (10, 11, 21, 22, 23, 41, 42) which can be placed in contact with said moulding element (4, 24, 43) at least at the boundary between the first portion and the second portion to form a drawer assembly (9, 20, 40), the first part of the moulding element being introduced into said housing (5) of the countermould up to the desired position, said assembly (9, 20, 40), once the first portion is in place in its housing, ensuring the continuity of the surface (2) of the countermould (1) in the vicinity of the moulding element while preventing the introduction of the material of the casting into the housing (5) during the casting and, in a second step, after solidification of the material of the casting, being extracted from said housing before being disassembled in order to release the first portion of the moulding element.

3. A device according to Claim 2, characterised in that the part in contact with the moulding element in order to form the drawer assembly is a single part and is made by moulding around the first portion of said moulding element by means of a pourable, solidifiable material, said material being separable from the moulding element.

4. A device according to Claim 3, characterised in that the material constituting the part surrounding the element confers on said part elastic properties which permit the assembling and disassembling of said part and of the moulding element by simple elastic deformation of said part.

5. A device according to Claim 2, characterised in that the drawer assembly (20, 40) is composed of several parts (21, 22, 23, 41, 42) surrounding the first portion of the moulding element (24, 43), said drawer assembly having sufficient elasticity of deformation to permit either the holding in place or the easy release of said first portion in the drawer assembly, without having to disassemble said assembly part by part.

6. A device according to Claim 2, characterised in that the part or parts (65, 66) which form the drawer assembly (69) with the blade (61) are intended to be incorporated in the mould during the moulding operation.

7. A device according to one of Claims 2 to 6, characterised in that the moulding element is a blade (24) at least one cross-section of which has a Y shape.

8. A device according to one of Claims 2 to 6, characterized in that the moulding element is a blade (43) at least one cross-section of which has a shape which has at least one undulation in at least one direction.

9. A reusable countermould (1) at least one surface (2) of which is used to mould a mould which in its turn is used to at least partially mould a tread of a tyre comprising a tread pattern of given shape, said countermould comprising at least one moulding element (4) comprising at least one undercut protruding from the moulding surface (2) of the countermould (1) and made separately, said countermould being characterised in that it comprises a housing (5) for receiving each moulding element (4), this housing (5) opening on to the moulding surface (2), said housing (5) permitting the putting in place of a drawer assembly (9) formed by the assembling of at least one part with the moulding element (4) and its removal, said part ensuring the continuity of the surface (2) of the countermould in the vicinity of said moulding element.

10. A countermould (1) according to Claim 9, characterised in that the part in contact with the moulding element (4) in order to form the drawer assembly (9) is a single part made by moulding around the first portion of said moulding element by means of a pourable, solidifiable material, said material being separable from the moulding element.

11. A countermould (1) according to Claim 9, characterised in that the drawer assembly (20, 40) is formed of several parts (21, 22, 23, 41, 42) surrounding the first portion of the moulding element (24, 43), said drawer assembly having sufficient elasticity of deformation to permit either the putting in place or the easy release of said first portion in the drawer assembly, without having to disassemble said assembly part by part.

12. A countermould (1) according to Claim 9, characterised in that the part or parts (65, 66) forming the drawer assembly (69) with the blade (61) are intended to be incorporated in the mould during the moulding operation.

13. A countermould (1) according to one of Claims 9 to 12, characterised in that the moulding element is a blade (24) at least one cross-section of which has a Y shape.

14. A countermould (1) according to one of Claims 9 to 12, characterized in that the moulding element is a blade (43) at least one cross-section of which has a shape which has at least one undulation in at least one direction.

15. A tyre moulded with a mould developed in accordance with the process defined in Claim 1.

## Patentansprüche

1. Verfahren zur Herstellung einer Form, die für das Abformen mindestens eines Teils der Lauffläche eines Reifens benutzt wird, wobei die genannte Lauffläche mit einem Profil vorgegebener Form versehen ist, das ein oder mehrere Muster mit mindestens einer Hinterschneidung aufweist, die durch Formelemente abgeformt sind, worin:
- man für jedes Muster, das mindestens eine Hinterschneidung aufweist, mindestens ein Formelement mit einem ersten Teil herstellt, der das genannte Muster festlegt, sowie mit einem zweiten Teil, der in der Verlängerung des ersten Teils gelegen ist und die Verankerung des genannten Elements in der genannten Form bildet;
- man eine Gegenform herstellt, die so ausgebildet ist, daß sie zu einer Ausformbewegung in einer vorbestimmten Richtung eingerichtet ist, mit einer Formfläche, die außerhalb des oder der Muster mit mindestens einer Hinterschneidung im wesentlichen mit dem genannten Profil übereinstimmt, und in die längs jedes Musters, das mindestens eine Hinterschneidung aufweist, ein Sitz eingebracht ist, der sich durch eine Öffnung in der Formoberfläche öffnet und dessen Kontur mindestens die Kontur einschließt, die der Projektion auf der genannten Formoberfläche und in der Ausformrichtung, von allen Punkten des genannten Musters umschrieben ist, das mindestens eine Hinterschneidung aufweist, wobei der genannte Sitz in der genannten Gegenform durch Verlängerung der Kontur des genannten Sitzes in der Ausformrichtung umrissen ist;
- man jedem Abformelement Mittel zuordnet, um die Kontinuität der Oberfläche der Gegenform in der Nachbarschaft des genannten Abformelements herzustellen, wenn sich dieses in seiner Lage im entsprechenden Sitz auf der Gegenform befindet, und um das genannte Abformelement in seiner Lage zu halten;
- man die Gegenform und das oder die Abformelement(e) zusammenbaut, wobei jedes Element mit zugeordneten Mitteln ausgestattet ist;
- man das Abformen der Form auf der Gegenform mittels eines geeigneten, vergießbaren und verfestigbaren Materials durchführt; und
- man die Form aus ihrer Gegenform dadurch ausformt, daß man jedes Formelement aus seinem Sitz in der Ausformrichtung herausführt, wobei der zweite Teil eines jeden Elements mit der genannten Form verbunden bleibt.

2. Vorrichtung, die das Einsetzen und Ausformen mindestens eines Formelements (4,24,43) in einer Gegenform (1) gestattet, mit einer Formoberfläche, die mittels Vergießens eines gießfähigen Materials zum Abformen einer Form für einen Teil einer Lauffläche eines Reifens bestimmt ist, wobei die genannte Gegenform (1) einen Sitz (5) aufweist, der längs der Lage des genannten Formelements in der Gegenform (1) gebildet ist, jedes Formelement zwei Teile mit einer gemeinsamen Grenze aufweist, nämliche einen ersten Teil (26,45), der ein Muster festlegt, das mindestens eine Hinterschneidung aufweist, und einen zweiten Teil (25,44), der in der Verlängerung des ersten Teils gelegen ist, dieser zweite Teil in Bezug auf die Formoberfläche der Gegenform (1) übersteht, die genannte Vorrichtung mindestens ein Bauteil (10,11,21,22,23,41,42) aufweist, das in Berührung mit dem genannten Formelement (4,24,43) mindestens an der Grenze zwischen dem ersten Teil und dem zweiten Teil gebracht werden kann, um eine Schiebergruppe (9,20,40) zu bilden, das erste Teil des Formelements in den genannten Sitz (5) der Gegenform bis zur gewünschten Lage eingeführt ist, und die genannte Gruppe (9,20,40), wenn sich der erste Teil zunächst in seinem Sitz an Ort und Stelle befindet, die Kontinuität der Oberfläche (2) der Gegenform (1) in der Nähe des Formelements sicherstellt, während sie gleichzeitig die Einleitung von Gußmaterial in den Sitz (5) während des Gusses verhindert, sowie in einem zweiten Schritt nach der Verfestigung des Gußmaterials aus dem genannten Sitz vor dem Auseinandermontieren herausgezogen wird, um den ersten Teil des Formelements freizusetzen.

3. Vorrichtung nach Anspruch 2, dadurch gekennzeichnet, daß das Bauteil, das sich in Berührung mit dem Formelement befindet, um die Schiebergruppe zu bilden, einstückig ist und durch Abformen rund um den ersten Teil des genannten Formelements mit Hilfe eines gießfähigen und verfestigbaren Materials hergestellt wird, wobei das genannte Material vom Formelement lösbar ist.

4. Vorrichtung nach Anspruch 3, dadurch gekennzeichnet, daß das Material, das das Bauteil bildet, das das Element umschließt, dem genannten Bauteil elastische Eigenschaften verleiht, die den Ein- und Ausbau des genannten Teils und des Formelements durch einfache elastische Verformung des genannten Bauteils gestatten.

5. Vorrichtung nach Anspruch 2, dadurch gekennzeichnet, daß die Schiebergruppe (20,40) aus mehreren Bauteilen (21,22,23, 41,42) zusammengesetzt ist, die das erste Teil des Formelements (24,43) einklemmen, wobei die genannte Schiebergruppe eine Verformungselastizität aufweist, die ausreicht, um entweder das erleichterte Einsetzen oder Lösen des genannten ersten Teils in der Schiebergruppe zu gestatten, ohne daß man die genannte Baugruppe Bauteil für Bauteil zu demontieren hat.

6. Vorrichtung nach Anspruch 2, dadurch gekennzeichnet, daß das oder die Bauteil(e) (65,66), das bzw. die die Schiebergruppe (69) mit der Lamelle (61) bildet bzw. bilden, dazu bestimmt ist bzw. sind, im Verlauf des Abformvorganges nut in die Form aufgenommen zu werden.

7. Vorrichtung nach einem der Ansprüche 2 bis 6, dadurch gekennzeichnet, daß das Formelement eine Lamelle (24) ist, bei der mindestens ein Querschnitt Y-förmig ist.

8. Vorrichtung nach einem der Ansprüche 2 bis 6, dadurch gekennzeichnet, daß das Formelement eine Lamelle (43) ist, bei der mindestens ein Querschnitt eine Form aufweist, die mindestens eine Wellung in mindestens einer Richtung darbietet.

9. Wiederbenutzbare Gegenform (1), deren mindestens eine Oberfläche (2) nutzbar ist, um durch Abformen eine Form herzustellen, welche ihrerseits verwendet wird, um mindestens teilweise eine Lauffläche eines Reifens abzuformen, die ein Profil mit vorgegebener Form aufweist, wobei die genannte Gegenform mindestens ein Formelement (4) aufweist, das mindestens eine Hinterschneidung aufweist, in Bezug auf die Formoberfläche (2) der Gegenform (1) übersteht und gesondert hergestellt ist, wobei die genannte Gegenform dadurch gekennzeichnet ist, daß sie einen Sitz (5) zur Aufnahme eines jeden Formelements (4) aufweist, dieser Sitz (5) in die Formoberfläche (2) einmündet, der genannte Sitz (5) das Einsetzen einer Schiebergruppe (9), die durch Anbau mindestens eines Bauteils an das Formelement (4) zusammengesetzt ist und ihre Entnahme gestattet, und das genannte Bauteil die Kontinuität der Oberfläche (2) der Gegenform in der Nähe des genannten Formelements sicherstellt.

10. Gegenform (1) nach Anspruch 9, dadurch gekennzeichnet, daß das mit dem Formelement (4) zum Bilden der Schiebergruppe (9) in Berührung stehende Bauteil einstückig ist und durch Abformung rund um den ersten Teil des genannten Formelements mit Hilfe eines gießbaren und verfestigbaren Materials hergestellt ist, wobei das genannte Material vom Formelement ablösbar ist.

11. Gegenform (1) nach Anspruch 9, dadurch gekennzeichnet, daß die Schiebergruppe (20,40) aus mehreren Bauteilen (21,22,23, 41,42) zusammengesetzt ist, die den ersten Teil des Formelements (24,43) einklemmen, und daß die genannte Schiebergruppe eine Verformungselastizität aufweist, die ausreicht, sei es das Einsetzen des genannten ersten Teils in die Schiebergruppe, sei es das erleichterte Lösen des Eingriffs mit dieser, zu gestatten, ohne die genannte Gruppe Stück für Stück auseinanderbauen zu müssen.

12. Gegenform (1) nach Anspruch 9, dadurch gekennzeichnet, daß das oder die Bauteil(e) (65,66), das bzw. die die Schiebergruppe (69) zusammen mit der Lamelle (61) bildet bzw. bilden, dazu bestimmt ist bzw. sind, in die Form im Verlauf der Durchführung des Formvorganges mitaufgenommen zu werden.

13. Gegenform (1) nach einem der Ansprüche 9 bis 12, dadurch gekennzeichnet, daß das Formelement eine Lamelle (24) ist, bei der mindestens ein Querschnitt Y-förmig ist.

14. Gegenform (1) nach einem der Ansprüche 9 bis 12, dadurch gekennzeichnet, daß das Formelement eine Lamelle (43) ist, bei der mindestens ein Querschnitt eine Form aufweist, die mindestens eine Wellung in mindestens einer Richtung darbietet.

15. Luftreifen, der mit einer Form abgeformt wurde, die nach dem Verfahren hergestellt wurde, das durch Anspruch 1 umrissen ist.
